# EUROPÄISCHE PATENTSCHRIFT

(11) **EP 0 405 185 B1**
(45) Veröffentlichungstag und Bekanntmachung des Hinweises auf die Patenterteilung: **29.09.1993**
(21) Anmeldenummer: 90110551.0
(22) Anmeldetag: 02.06.1990
(51) Int. Cl.: B29C 59/04, B29C 35/16, B24B 55/02

(54) **Einrichtung zum Schleifen der Oberfläche von Laminaten**
Apparatus for roughing a laminate surface
Appareil pour ébaucher une feuille stratifiée

(30) Priorität: 27.06.1989 DE 3920946
(43) Veröffentlichungstag der Anmeldung: 02.01.1991
(73) Patentinhaber: Held, Kurt, D-78647 Trossingen (DE)
(72) Erfinder: Held, Kurt, D-78647 Trossingen (DE)

(56) Entgegenhaltungen:
- EP-A- 0 046 604
- EP-A- 0 092 745
- EP-A- 0 113 823
- EP-A- 0 215 392
- EP-A- 0 259 916
- DE-A- 3 300 860
- FR-A- 1 294 735
- US-A- 4 750 914
- US-A- 4 776 862

## Beschreibung

Die Erfindung betrifft eine Schleif- und Kühleinrichtung für eine Vorrichtung zur kontinuierlichen Herstellung von Laminaten gemäß dem Oberbegriff des Patentanspruchs 1.

Laminate oder Schichtstoffe bestehen aus mehreren Lagen von Materialbahnen, die mit einem duroplastischen oder thermoplastischen Harz getränkt, in der gewünschten Reihenfolge aufeinandergeschichtet und miteinander verpreßt sind. Als Materialbahnen werden Faser- oder Gewebebahnen verwendet. Zur Imprägnierung mittels duroplastischer Harze werden beispielsweise Melamin-, Harnstoff-, Phenol-, Epoxyharze oder dergleichen verwendet. Während duroplastische Harze durch Wärme oder eine chemische Reaktion aushärten, härten thermoplastische Harze durch Kühlung aus.

Ein Beispiel für solche Schichtstoffe sind dekorative Laminate, die zur Oberflächenbeschichtung von Spanplatten eingesetzt werden. Diese dekorativen Laminate bestehen aus einer Kern- und Oberflächenschicht, die sich wiederum aus melamin- oder phenolharzgetränkten Papieren zusammensetzt. Die auf der Kernschicht aufliegende Oberflächenschicht ist dabei mit einem Dekordruck, beispielsweise der Imitation einer Holzmaserung versehen.

Zur Herstellung von Laminaten werden zunehmend kontinuierliche Verfahren eingesetzt, da diese gegenüber den diskontinuierlichen Verfahren eine gesteigerte Quantität und Qualität aufweisen. Eine kontinuierlich arbeitende Vorrichtung zur Herstellung dekorativer Laminate ist aus der DE-A- 32 47 146 bekannt geworden. Die dort gezeigte Vorrichtung besteht aus einer Doppelbandpresse, vor der mehrere Abwickeleinheiten angeordnet sind. In den Abwickeleinheiten befinden sich Vorratsrollen, von denen die harzimprägnierten Materialbahnen abgewickelt und zu einem Schichtgebilde zusammengeführt werden. Dieses Schichtgebilde läuft in eine Doppelbandpresse ein und wird dort unter Einwirkung von Flächendruck und gegebenenfalls Wärme zu einer Laminatbahn verpreßt. Hinter der Doppelbandpresse folgt eine Sprühwasserkühleinrichtung, in der die Laminatbahn abgekühlt wird. Anschließend wird die Rückseite der Laminatbahn in einer dahinter folgenden Schleifstation aufgerauht, um eine bessere Verleimbarkeit des dekorativen Laminates auf der Trägerplatte zu gewährleisten. Die solchermaßen behandelte Laminatbahn wird dann in einer Aufwickeleinrichtung auf eine Vorratsrolle aufgewickelt oder in einer Querschneidestation in Platten aufgeteilt. Die Schleifstation kann dabei mit diamantbestückten Rundbürsten ausgestattet sein**.**

Nachteil bei dieser bekannten Vorrichtung ist, daß insbesondere bei höheren Produktions- und damit auch höheren Vorlaufgeschwindigkeiten der Laminatbahn eine große Wärmebelastung der geschliffenen Oberfläche auftritt, die zu unansehnlichen Oberflächen mit mechanisch schlechteren Eigenschaften führt. Bei empfindlichen Laminaten kann es dann sogar zu vermehrtem Ausschuß kommen. Ein weiterer Nachteil ist darin zu sehen, daß sich die Schleifbürsten sehr schnell mit Schleifstaub von der Laminatoberfläche zu- setzen, so daß die Schleifbürsten relativ häufig gewechselt werden müssen. Dabei muß jedoch die Laminatherstellung unterbrochen werden, so daß diese häufigen Produktionsausfälle insgesamt zu einer Herabsetzung der Produk- tionsleistung der kontinuierlich arbeitenden Anlage führen. Außerdem ist dadurch ein erhöhter Kostenaufwand für die Wartung nötig.

Des weiteren ist aus der EP-A-0 046 604 ein Werkzeug zum Glätten und Polieren von festen Oberflächen bekannt, bei dem eine rotierende Platte eine Mehrzahl von zylinderstumpfförmigen Rollen aufweist. Die Rollen sind radial angeordnet und drehen sich um ihre eigene Achse. Der Drehsinn der Rollen ist derart, daß sich ihre Umfangsgeschwindigkeit zu der Umfangsgeschwindigkeit der rotierenden Platte addiert.

Weiterhin ist aus der FR-A-1 294 735 eine Vorrichtung zur kontinuierlichen Herstellung einer Thermoplastbahn mit samt- oder fellartiger Oberfläche bekannt. Die Vorrichtung besteht aus einer Wanne, in der sich eine Kühlflüssigkeit befindet. In der Wanne ist eine Trommel mit einer aus Spitzen bestehenden Oberfläche angeordnet, mittels der in die Oberfläche der Thermoplastbahn eine Struktur eingeprägt wird. Nachdem die Strukturierung in die Oberfläche der Thermoplastbahn eingebracht ist, wird die Thermoplastbahn zur Verfestigung in die Kühlflüssigkeit eingeführt.

Der Erfindung liegt die Aufgabe zugrunde, die Vorrichtung zur kontinuierlichen Herstellung von Laminaten so weiterzuentwickeln, daß sie zur Her- stellung von Laminaten mit verbesserten Oberflächengüten bei höheren Pro- duktionsgeschwindigkelten und weniger Produktionsausfällen aufgrund von Wartungsarbeiten geeignet ist.

Die Lösung dieser Aufgabe wird durch die im Kennzeichen des Patentanspruchs 1 beschriebene technische Lehre vermittelt.

Die erfindungsgemäße Einrichtung weist eine innere Wanne auf, in der sich das Kühlwasser für die Laminatbahn sowie eine im Kühlwasser drehbar gelagerte Schleifbürste befinden. Dadurch wird der Schleifstaub im Kühlwasser gelöst und so ein Zusetzen der Oberfläche der Schleifbürste mit dem Schleifstaub wirksam vernindert. Der Schleifstaub wird weiter aus der Vorrichtung mit dem Kühlwasser abtransportiert und von einem Filter aufgefangen. Indem die Schleif- und Kühleinrichtung der erfindungsgemäßen Vorrichtung unter Unterdruck gehalten wird, wird wirksam ein Ausfließen des Kühlwassers aus der Vorrichtung verhindert.

Weitere vorteilhafte Ausgestaltungen der Erfindung sind in den Unteransprüchen angegeben.

Es ist eine besonders effektiv arbeitende Schleifbürste angegeben, die aus einer zylinderförmigen Hohlwalze besteht. Auf der Manteloberfläche der Hohlwalze wechseln sich spiralförmige Nuten und Stege ab, wobei die Stege mit Diamanten besetzt sind. Um ein Durchschleifen der Laminatbahn mit solch einer effektiv arbeitenden Schleifbürste bei einem Produktionsausfall zu verhindern, kann an der Vorrichtung ein Bewegungssensor für die Laminatbahn angebracht werden, so daß bei einem Anhalten der Laminatbahn ein Signal des Bewegungssensors ein Abheben der Laminatbahn von der Schleifbürste auslöst.

Durch die erfindungsgemäße Integration der Schleifstation und der Kühlstation in einem einzigen Gerät wird vorteilhafterweise die Gesamtlänge der Vorrichtung zur kontinuierlichen Herstellung von dekorativen Laminaten verkürzt, womit gleichzeitig die Kosten zur Herstellung dieser Vorrichtung verringert werden. Die weiter mit der Erfindung erzielten Vorteile bestehen insbesondere darin, daß eine Beschädigung der Oberfläche der Laminatbahn aufgrund von Reibungswärme auch bei höheren Produktionsgeschwindigkeiten beim Schleifen verhindert wird. Da die Schleifbürste vollständig vom Kühlwasser umgeben sein kann, resultiert ein geringerer bzw. gar kein Verschleiß der Schleifbürsten. Ein Zusetzen der Schleifbürsten durch Schleif- staub wird dadurch wirksam verhindert, so daß die Wartungshäufigkeit für die Schleifbürsten stark reduziert wird.

Ein Ausführungsbeispiel für eine erfindungsgemäße Vorrichtung ist in den Zeichnungen dargestellt und wird im folgenden näher beschrieben. Es zeigen
- Fig. 1: die Gesamtansicht einer Vorrichtung zur kontinuierlichen Herstellung von Laminaten,
- Fig. 2: eine Doppelbandpresse schematisch im Schnitt,
- Fig. 3: die perspektivische Ansicht einer Schleif- und Kühleinrichtung teilweise im Schnitt und mit teilweise aufgeschnittenem Gehäuse,
- Fig. 4: einen Ausschnitt aus Fig. 3 in vergrößerter Darstellung zur Funktionsweise der Schleifbürste,
- Fig. 5: ein Prinzipschema zur Funktion der Schleif- und Kühleinrichtung,
- Fig. 6: einen Längsschnitt durch die Schleifbürste und
- Fig. 7: einen Ausschnitt der Oberfläche der Schleifbürste.

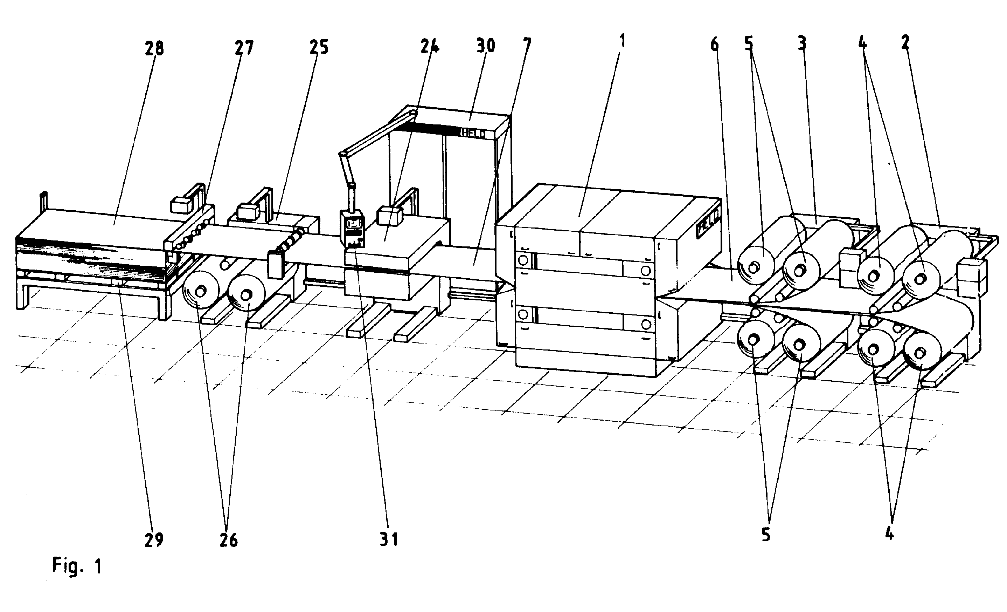

Eine Vorrichtung zur kontinuierlichen Herstellung von dekorativen Laminaten ist in Fig. 1 gezeigt. Sie besteht aus einer Doppelbandpresse 1 mit einigen davor und dahinter angeordneten Aggregaten. Vor der Doppelbandpresse 1 befinden sich Abwickeleinheiten 2, 3 mit darin angebrachten Vorratsrollen 4, 5. Die Vorratsrollen 4, 5 beinhalten die mit einem vorkondensierten duroplastischen Harz imprägnierten Papierbahnen, aus denen sich der dekorative Schichtstoff zusammensetzt. Von den Vorratsrollen 4, 5 werden die beharzten Papierbahnen kontinuierlich abgezogen und vor der Doppelbandpresse 1 zu einem Schichtgebilde 6 zusammengeführt. Dieses Schichtgebilde 6 läuft dann in die Doppelbandpresse 1 ein und wird dort kontinuierlich unter Einwirkung von wärme und Flächendruck zur dekorativen Laminatbahn 7 ausgehärtet.

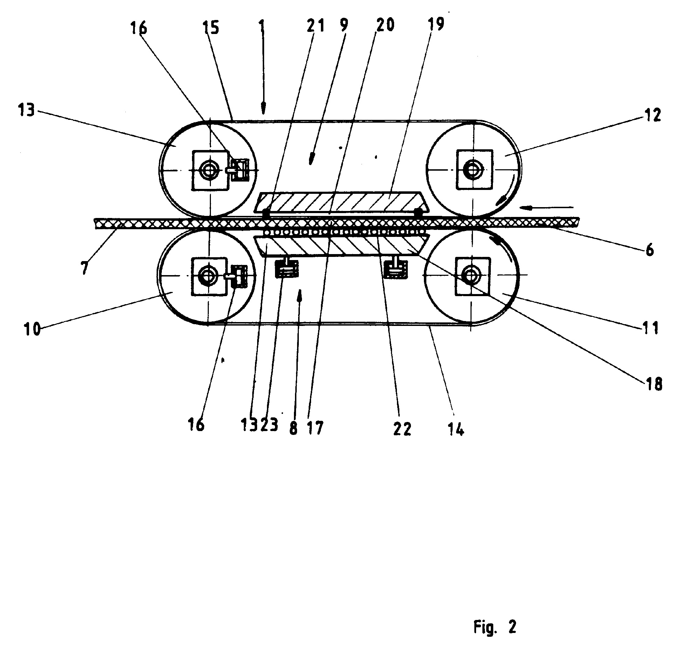

Die kontinuierlich arbeitende Doppelbandpresse 1 ist in Fig. 2 näher gezeigt. Sie besteht aus einer unteren Preßbandeinheit 8 und einer oberen Preßbandeinheit 9, die übereinander angeordnet sind. Die Preßbandeinheiten 8, 9 setzen sich aus je zwei Umlenktrommeln 10, 11 bzw. 12, 13 und je einem endlosen Preßband 14, 15 zusammen, das um die Umlenktrommeln 10, 11 bzw. 12, 13 herumgeführt und mittels Hydraulikzylindern 16 gespannt ist. Die vier Umlenktrommeln 10, 11 bzw. 12, 13 sind in einem in der Zeichnung aus Übersichtlichkeitsgründen nicht dargestellten Pressengestell drehbar gelagert. Wenigstens jeweils eine Umlenktrommel beider Preßbandeinheiten 8, 9 ist angetrieben, so daß sich die beiden Preßbänder 14, 15 entsprechend den Pfeilen in den Umlenktrommeln 11, 12 bewegen.

Zwischen dem unteren Bandtrum des oberen Preßbandes 15 und dem oberen Bandtrum des unteren Preßbandes 14 liegt die Reaktionszone 17, in der das in der Zeichnung von rechts nach links vorlaufende Schichtgebilde 6 unter gleichzeitigem Durchlauf durch die Doppelbandpresse 1 verpreßt wird. Der auf das Schichtgebilde 6 in der Reaktionszone 17 der Doppelbandpresse 1 ausgeübte Flächendruck wird über Druckplatten 18, 19 auf die Innenseiten der Preßbänder 14, 15 hydraulisch oder mechanisch aufgebracht und von den Preßbändern 14, 15 dann auf das zu verpressende Schichtgebilde 6 übertragen. Die vom Schichtgebilde 6 ausgeübten Reaktionskräfte werden über die Druckplatten 18, 19 wiederum in das Pressengestell eingeleitet.

Bei der hydraulischen Druckübertragung wird ein unter Druck setzbares fluides Druckmedium in den Raum zwischen der Druckplatte 19 und der Innenseite des Preßbandes 15 gebracht, wie in Fig. 2 anhand der oberen Preßbandeinheit 9 gezeigt ist. Zu den Seiten ist dieser Raum, die sogenannte Druckkammer 20, von einer ringförmig in sich geschlossenen, in der Druckplatte 19 angebrachten und auf der Innenseite des Preßbandes 15 gleitenden Gleitflächendichtung 21 begrenzt. Als Druckmedium wird vorzugsweise ein synthetisches Öl verwendet. Genausogut kann Jedoch auch ein Gas, beispielsweise Druckluft, verwendet werden.

Zur mechanischen Erzeugung des auf das Schichtgebilde 6 einwirkenden Flächendrucks sind zwischen der Druckplatte 18 und der Innenseite des Preßbandes 14 ortsfeste Rollen 22 angeordnet, wie in Fig. 2 anhand der unteren Preßbandeinheit 8 gezeigt ist. Mit Hilfe von Hydraulikzylindern 23 wird die Druckplatte 18 mitsamt den Rollen 22 gegen die Innenseite des Preßbandes 14 angestellt.

Selbstverständlich kann auch die Druckplatte 19 mit einem mechanischen Druckübertragungssystem bzw. die Druckplatte 18 mit einem hydraulischen Druckübertragungssystem versehen sein. Falls gewünscht, kann die Druckübertragung auch kombiniert hydraulisch/mechanisch erfolgen, indem die beiden geschilderten Prinzipien gleichzeitig angewandt werden.

Falls das Schichtgebilde 6 zur Aushärtung Wärme benötigt, kann die Druckplatte 18, 19 als Heizplatte ausgebildet sein. Die Wärme wird dann von der Druckplatte 18, 19 mittels der Rollen 22 oder mittels wärmeleitender Elemente auf das Preßband 14, 15 und von diesem auf das Schichtgebilde 6 in der Reaktionszone 17 übertragen. Die Ausbildung solcher wärmeleitender Elemente ist an sich bekannt und kann nach der DE-OS 33 25 578 erfolgen. Die Druckplatten 18, 19 der Doppelbandpresse 1 können auch in eine Heiz- und Kühlzone eingeteilt sein, so daß das Schichtgebilde 6 bereits in der Doppelbandpresse 1 unter Wirkung des Drucks gekühlt wird.

Wie in Fig. 1 zu sehen ist, verläßt die Laminatbahn 7 nach der Verpressung die Doppelbandpresse 1 mit gleichförmiger Geschwindigkeit und durchläuft anschließend eine Schleif- und Kühleinrichtung 24, die entsprechend der Erfindung in einem einzigen Gerät kombiniert ist. Danach wird die Laminatbahn 7 in einer Aufwickeleinrichtung 25 auf Vorratsrollen 26 aufgewickelt. Alternativ kann die Laminatbahn 7 auch in einer Querschneidestation 27 in einzelne Platten 28 aufgeteilt werden, die dann zum Abtransport auf Paletten 29 gestapelt werden.

Der gesamte Verfahrensablauf der in Fig. 1 gezeigten Anlage, also die Abwicklung der beharzten Papierbahnen, die Vorgabe und Konstanthaltung der Prozeßparameter in der Doppelbandpresse 1 und in der Schleif- und Kühleinrichtung 24 sowie die Aufteilung der Laminatbahn 7 in einzelne Platten 28, wird von einem Rechner, der im Schaltschrank 30 angeordnet ist, gesteuert. Zur Eingabe der Prozeßparameter durch den Benutzer dient das Datenterminal 31. Selbstverständlich kann der Rechner im Schaltschrank 30 auch an einen externen Hostrechner, der sich beispielsweise in der Zentral-EDV befindet, angeschlossen sein, um eine Steuerung der Produktion und Rückmeldung der Produktionsdaten zur weiteren Auswertung direkt von der Zentrale aus zu ermöglichen.

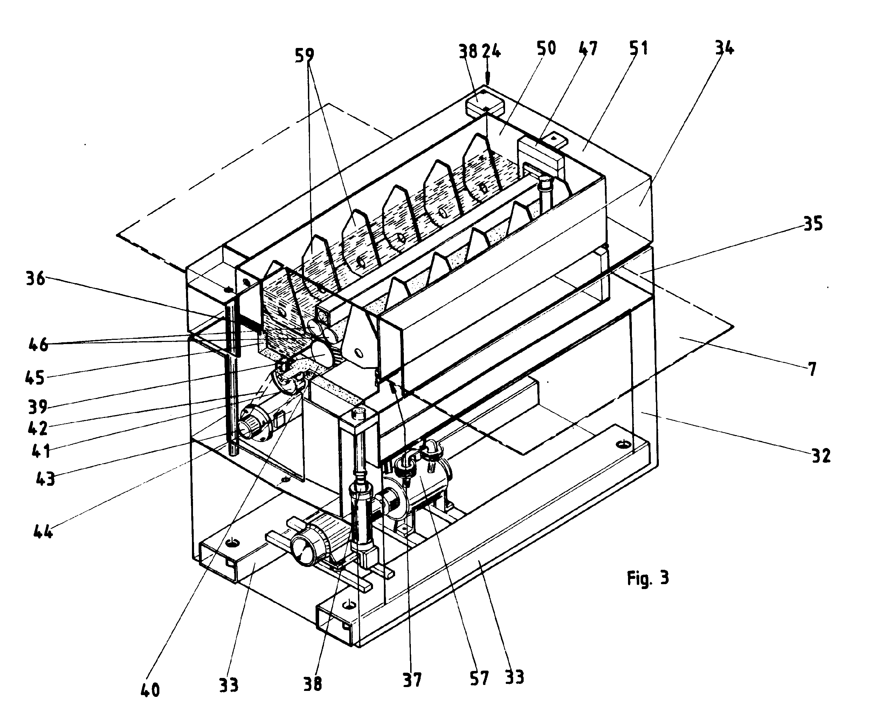

Gemäß der Erfindung erfolgt das Schleifen und Kühlen der Laminatbahn 7 gleichzeitig in der Schleif- und Kühleinrichtung 24. Die Ausbildung dieser Schleif- und Kühleinrichtung 24 ist in Fig. 3 in perspektivischer Ansicht näher gezeigt, wobei das Gehäuse teilweise aufgeschnitten dargestellt ist, um die innenliegenden Teile besser verdeutlichen zu können.

Die Schleif- und Kühleinrichtung 24 besitzt ein Gestell 32 mit Füssen 33. Auf dem Gestell 32 ist ein wannenförmiges Gehäuseunterteil 35 und darüber ein Gehäuseoberteil 34 angeordnet. Im Inneren des Gehäuseoberteils 34 und Gehäuseunterteils 35 befindet sich eine innere Wanne 50, die von der durch das Gehäuse gebildeten äußeren Wanne 51 umgeben ist. Das Gehäuseoberteil 34 sitzt mittels einer Dichtung 36 auf dem Gehäuseunterteil 35 auf und dichtet dadurch die innere Wanne 50 nach außen ab. Das Gehäuseoberteil 34 kann durch eine Zylinder-Kolben-Einheit 38 zu Wartungszwecken vom Gehäuseunterteil 35 abgehoben werden. An einem Ein- und Auslaßspalt 37 zwischen dem Gehäuseoberteil 34 und dem Gehäuseunterteil 35 läuft die Laminatbahn 7 in die innere Wanne 50 der Schleif- und Kühleinrichtung 24 hinein. Dabei gleitet die Laminatbahn 7 an der Dichtung 36 im Gehäuseoberteil 34 und Gehäuseunterteil 35 entlang, so daß der Ein-und Auslaßspalt 37 der Schleifund Kühleinrichtung 24 gegenüber der Außenseite abgedichtet ist.

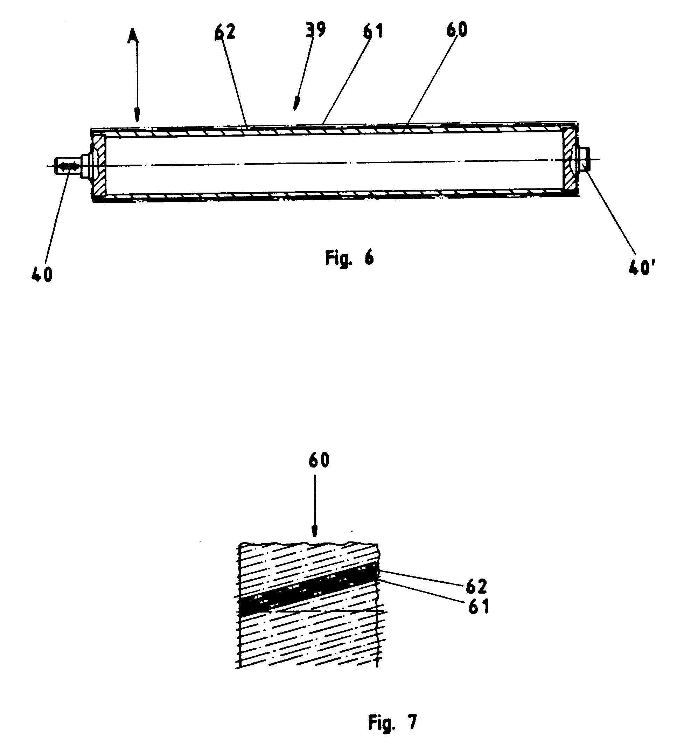

In der inneren Wanne 50 des Gehäuseunterteils 35 ist eine diamantbestückte, im Querschnitt kreisförmige Schleifbürste 39 angeordnet. Wie in Figur 6 näher zu sehen ist, besteht die Schleifbürste 39 aus einer zylindrischen Hohlwalze 60, an deren beiden Enden Achsstummel 40, 40' eingeschweißt sind. Mit Hilfe der Achsstummel 40, 40' wird die Schleifbürste 39 in den Wänden 45 der inneren Wanne 50 drehbar gelagert (siehe Fig. 3). Der an der vorderen Seite der Schleifbürste 39 befestigte Achsstummel 40 reicht durch die Wand 45 der inneren Wanne 50 in die äußere Wanne 51 hindurch. In der äußeren Wanne 51 ist ein Ritzel 41 auf dem Achsstummel 40 angebracht. Im Gestell 32 ist ein Motor 44 angeordnet, auf dessen Welle ein Antriebszahnrad 43 sitzt. Über das Antriebszahnrad 43 und das Ritzel 41 ist ein Zahnriemen 42 gespannt, so daß der Motor 44 die Schleifbürste 39 dreht. Zur besseren Verdeutlichung dieser Anordnung ist die Wand 45 sowie das Ritzel 41 und der Achsstummel 40 in der Fig. 3 aufgeschnitten dargestellt.

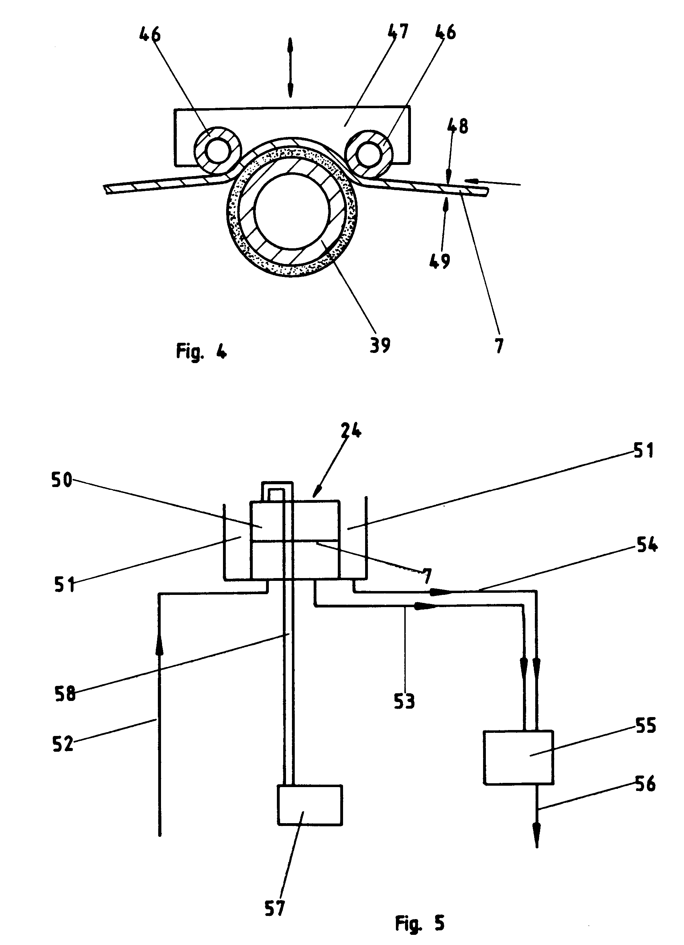

Die Führung der Laminatbahn 7 in der inneren Wanne 50 der Schleif- und Kühleinrichtung 24 ist in Fig. 4 in einem Prinzipbild näher zu sehen. In einem im Gehäuseoberteil 34 angeordneten Lagerblock 47 sind zwei Gegendruckwalzen 46 drehbar gelagert, wobei sich die Gegendruckwalzen 46 über der Schleifbürste 39 in deren unmittelbarer Nähe befinden. Der Lagerblock 47 ist so eingestellt, daß die Gegendruckwalzen 46 die Vorderseite 48 der Laminatbahn 7 berühren und deren Rückseite 49 an einem Teil des Umfangs der Schleifbürste 39 unter einem Anpreßdruck anlegen. Die Gegendruckwalzen 46 benötigen keinen eigenen Antrieb, da diese durch die Bewegung der Laminatbahn 7 gedreht werden. Der Lagerblock 47 ist in Pfeilrichtung, das heißt senkrecht zur Laminatbahn 7, zustell- oder wegbewegbar, um damit den Anpreßdruck der Gegendruckwalzen 46 auf die Laminatbahn 7 einstellen zu können.

Das Schleifen der Rückseite 49 der Laminatbahn 7 mittels der diamantbestuckten Schleifbürste 39 ist sehr effektiv und kann bei höheren Geschwindigkeiten durchgeführt werden als dies bisher möglich war. Damit wird eine weitere Leistungssteigerung der gesamten Vorrichtung zur Herstellung von Laminaten ermöglicht. Um Jedoch ein Durchschleifen des Laminats bei stehender Laminatbahn 7 zu verhindern, was bei einer Produktionsunterbrechung auftreten kann, ist der Lagerblock 47 in Richtung von der Schleifbürste 39 wegbewegbar, wodurch der Anpreßdruck der Gegendruckwalzen 46 aufgehoben wird und die Rückseite 49 der Laminatbahn 7 von der Schleifbürste 39 abgehoben wird. Zur Automatisierung kann an der Laminatbahn 7 ein Bewegungssensor angebracht werden, der einen Stillstand der Laminatbahn 7 an den Rechner im Schaltschrank 30 meldet, der wiederum das Abheben der Gegendruckwalzen 46 im Lagerblock 47 von der Laminatbahn 7 auslöst.

Während des Schleifens der Rückseite 49 wird die Laminatbahn 7 in der Schleif- und Kühleinrichtung 24 gleichzeitig gekühlt. Dazu befindet sich in der inneren Wanne 50 Kühlwasser. Wie in Fig. 3 zu sehen ist, ist die innere Wanne 50 soweit mit Kühlwasser gefüllt, daß sowohl die Vorderseite 48 als auch die Rückseite 49 der Laminatbahn 7 vollständig mit Kühlwasser bedeckt sind. Ein Auslaufen des Kühlwassers aus der inneren Wanne 50 wird durch die Dichtung 36 verhindert. Durch Leckage können Jedoch geringe Mengen Kühlwasser aus der Inneren Wanne 50 austreten, sowie auch mit der bewegten Laminatbahn 7 durch die Dichtung 36 hindurchgeschleppt werden. Solches Spritzwasser wird durch die äußere Wanne 51 aufgefangen und dort gesammelt, so daß ein Austreten von Kühlwasser aus der Schleif- und Kühleinrichtung 24 wirkungsvoll verhindert ist.

Die Wirkungsweise der Schleif- und Kühleinrichtung 24 wird in einem Prinzipschema in Fig. 5 näher erläutert. Über einen Kühlwasserzulauf 52 wird frisches Kühlwasser der inneren Wanne 50 der Schleif- und Kühleinrichtung 24 zugeführt. Aus der inneren Wanne 50 kann Kühlwasser mittels einer Kühlwasserrückleitung 53 abgeführt werden. Durch Regelung des Zulaufs im Kühlwasserzulauf 52 und des Ablaufs in der Kühlwasserrückleitung 53 können sowohl die Temperatur als auch der Füllstand des Kühlwassers in der inneren Wanne 50 konstant gehalten werden, um so eine optimale Kühlung der Laminatbahn 7 zu gewährleisten. Die in der äußeren Wanne 51 gesammelte Leckage an Kühlwasser wird über eine Spritzwasserrückleitung 54 abgeleitet.

Der durch das Schleifen der Rückseite 49 der Laminatbahn 7 entstehende Schleifstaub wird von dem Kühlwasser von der Rückseite 49 der Laminatbahn 7 und der Schleifbürste 39 hinweggeschwemmt. Dieser im Kühlwasser gelöste Schleifstaub wird mit dem Abwasser in der Kühlwasserrückleitung 53 und Spritzwasserrückleitung 54 zu einem Filter 55 transportiert, in den die Kühlwasserrückleitung 53 und Spritzwasserrückleitung 54 münden. Im Filter 55 wird der Schleifstaub aus dem verbrauchten Kühlwasser entfernt. Das gereinigte Abwasser wird dann vom Filter 55 in einer Kanalzuleitung 56 abgeführt. Zuvor kann es noch durch einen Wärmetauscher geführt werden, um die bei der Kühlung der Laminatbahn 7 aufgenommene Wärme zurückzugewinnen.

Um die Menge des in der äußeren Wanne 51 gesammelten Spritzwassers so gering wie möglich zu halten, wird die innere Wanne 50 unter ein leichtes Vakuum gesetzt. Dazu ist eine Vakuumpumpe 57 im Gestell 32 der Schleif- und Kühleinrichtung 24 angeordnet, wie in den Figuren 3 und 5 zu sehen ist. Von dieser Vakuumpumpe 57 geht eine Verbindungsleitung 58 zur inneren Wanne 50 im Gehäuseoberteil 34. Aufgrund der durch die Verbindungsleitung 58 über die Vakuumpumpe 57 abgesaugten Luft, steht die innere Wanne 50 unter einem leichten Unterdruck gegenüber der äußeren Wanne 51. Dieser Unterdruck verhindert ein Austreten von Kühlwasser aus der inneren Wanne 50 in die äußere Wanne 51. Zur Versteifung der unter Vakuum stehenden inneren Wanne 50 sind, wie in der Fig. 3 zu sehen ist, Rippen 59 in der inneren Wanne 50 angeordnet.

Als Schleifbürste 39 zum Schleifen der Rückseite 49 der Laminatbahn 7 in der erfindungsgemäßen Schleif- und Kühleinrichtung 24 ist prinzipiell jede herkömmliche mit Borsten bestückte Schleifbürste geeignet. Die Bürste kann auch mit Hartstoffen bestückt sein, beispielsweise mit kubischem Bornitrit. Als besonders effektiv haben sich Jedoch diamantbestückte Schleifbürsten erwiesen, die sowohl eine höhere Standzeit aufweisen als auch eine größere Vorschubgeschwindigkeit der Laminatbahn 7 in der Schleif- und Kühleinrichtung 24 gestatten. Die Ausnutzung von höheren Vorschubgeschwindigkeiten bei der Bearbeitung der Rückseite 49 der Laminatbahn 7 mittels einer diamantbestückten Schleifbürste 39 wird erst durch die erfindungsgemäße gleichzeitige Kühlung beim Schleifen der Laminatbahn 7 ermöglicht, da dadurch eine sichere Abführung der Reibungswärme ermöglicht wird, was wiederum eine Beschädigung der Laminatoberfläche durch die auftretende Reibungswärme wirksam verhindert.

Eine besonders bevorzugte Ausbildung der Schleifbürste 39 ist in Fig. 6 näher zu sehen. Sie besteht aus einer zylinderförmigen Hohlwalze 60, in deren Oberfläche Nuten 62 eingearbeitet sind, die sich spiralförmig um den Mantel der zylinderförmigen Oberfläche der Hohlwalze 60 winden. In Fig. 7 ist in Draufsicht entsprechend der Richtung A von Fig. 6 ein Teil der Oberfläche der Hohlwalze 60 gezeigt. Wie dort ersichtlich ist, wechseln sich spiralförmig verlaufende Stege 61 und Nuten 62 auf der Oberfläche der Hohlwalze 60 ab. Die Stege 61 sind mit Diamanten bestückt, die die eigentliche Schleifwirkung auf die Rückseite 49 der Laminatbahn 7 ausüben. Durch die spiralförmige Anordnung der Stege 61 und Nuten 62 ergibt sich einerseits eine völlig gleichmäßige Schleifwirkung auf der Rückseite 49 der Laminatbahn 7 und andererseits eine gleichmäßige Kühlwirkung durch das in den Nuten 62 mitgeführte Kühlwasser. Der beim Schleifen entstehende Schleifstaub wird von der Oberfläche der Laminatbahn 7 in die Nuten 62 aufgenommen und von diesen durch die Bewegung des Kühlwassers in den Spiralen zur Seite herausgespült und schließlich mit dem in der Kühlwasserrückleitung 53 (siehe Fig. 5) abgeführten Kühlwasser im Filter 55 abgeschieden.

Die Bestückung der Stege 61 mit Diamanten kann erfolgen, indem Diamantpulver galvanisch auf die Oberfläche der Stege 61 gebunden wird. Eine weitere Möglichkeit besteht darin, auf die Stege 61 eine Diamant-Verbundschicht aufzulöten oder aufzuschweißen. Eine solche Diamant-Verbundschicht besteht aus einer unter extrem hohen Temperaturen und Drücken zusammengewachsenen Masse willkürlich in einer Metallmatrix orientierter Diamantpartikel.

Die erfindungsgemäße Einrichtung ist am Beispiel der Herstellung von dekorativen Laminaten beschrieben. Sie läßt sich jedoch zur Herstellung beliebiger Laminate verwenden. Es ist offensichtlich, daß durch die beschriebene Kombination des Schleif-und Kühlvorgangs in einem einzigen Gerät eine synergistische Wirkung eintritt und dadurch die Produktionsgeschwindigkeit der Vorrichtung zur kontinuierlichen Herstellung von Laminaten insgesamt erhöht werden kann. Dadurch erhält man eine weitere Steigerung der Produktionsleistung dieser Vorrichtung, wie sie mit der bisher bekannten Vorrichtung nicht möglich war.

## Patentansprüche

1. Schleif- und Kühleinrichtung für eine Vorrichtung zur kontinuielichen Herstellung von Laminaten, die aus mehreren Lagen von mindestens teilweise harzimprägnierten, miteinander verpreßten Materialbahnen bestehen, mit Abwickeleinheiten (2,3) zur Aufnahme der Vorratsrollen (4,5), von denen die Materialbahnen abgezogen und anschließend aufeinander geschichter werden, einer Doppelbandpresse (1) in der die aufeinandergeschichteten Materialbahnen (6) unter Einwirkung von Flächendruck und gegebenenfalls Wärme zu einer Laminatbahn (7) verpreßt werden, wobei die Schleif- und Kühleinrichtung hinter der Doppelbandpresse angeordnet ist und in ihr die Rückseite der laminatbahn (7) aufgerauht wird, und einer Aufwickeleinrichtung (25) mit Vorratsrollen (26) zur Aufwicklung der Laminatbahn (7) oder einer Querschneidestation (27) zur Aufteilung der Laminatbahn (7) in Platten (28), **dadurch gekennzeichnet**, daß die Schleifstation mit der Kühlstation in einem einzigen Gerät zu der Schleif- und Kühleinrichtung (24) kombiniert ist, und
daß die Schleif- und Kühleinrichtung (24) ein Gestell (32) besitzt, auf dem ein Gehäuseoberteil (34) und ein Gehäuseunterteil (35) angeordnet ist, daß im Gehäuseoberteil (34) und Gehäuseunterteil (35) eine innere Wanne (50) vorhanden ist, die nach außen durch im Gehäuseoberteil (34) und Gehäuseunterteil (35) angebrachte Dichtungen (36) abgedichtet ist, zwischen dem Gehäuseoberteil (34) und Gehäuseunterteil (35) ein Ein- und Auslaßspalt (37) in die innere Wanne (50) für die Laminatbahn (7) vorhanden ist, die innere Wanne (50) zur Aufnahme von Kühlwasser dient und in der inneren Wanne (50) eine Schleifbürste (39) drehbar gelagert ist, über deren Oberfläche die Rückseite (49) der Laminatbahn (7) anliegend geführt wird.

2. Schleif- und Kühleinrichtung nach Patentanspruch 1, **dadurch** **gekenn****zeichnet**, daß durch das Gehäuseoberteil (34) und Gehäuseunterteil (35) rings um die innere Wanne (50) eine äußere Wanne (51) gebildet wird, die zur Aufnahme der Leckage des Kühlwassers dient.

3. Schleif- und Kühleinrichtung nach Patentanspruch 1 oder 2, **dadurch** **gekenn****zeichnet**, daß im Gehäuseoberteil (34) ein Lagerblock (47) mit darin drehbar gelagerten Gegendruckwalzen (46) so angeordnet ist, daß die Gegendruckwalzen (46) auf der Vorderseite (48) der Laminatbahn (7) aufliegen und die Rückseite (49) der Laminatbahn (7) unter einem Anpreßdruck an die Schleifbürste (39) anlegen.

4. Schleif- und Kühleinrichtung nach Patentanspruch 3, **dadurch gekennzeich****net**, daß der Lagerblock (47) senkrecht zur Laminatbahn (7) bewegbar ist, um die Gegendruckwalzen (46) an die Laminatbahn (7) anstellen und von dieser abheben zu können.

5. Schleif- und Kühleinrichtung nach Patentanspruch 4, **dadurch gekennzeich****net**, daß an der Laminatbahn (7) ein Bewegungssensor angeordnet ist, der bei Stillstand der Laminatbahn (7) ein Signal an die Steuerung der Vorrichtung abgibt und diese Steuerung wiederum automatisch ein Abheben des Lagerblockes (47) mit den Gegendruckwalzen (46) von der Laminatbahn (7) auslöst, um ein Durchschleifen der Laminatbahn (7) zu verhindern.

6. Schleif- und Kühleinrichtung nach einem der Patentansprüche 1 bis 5, **dadurch** **gekennzeichnet**, daß die innere Wanne (50) mit einem Kühlwasserzulauf (52) und einer Kühlwasserrückleitung (53) versehen ist, daß an der äußeren Wanne (51) eine Spritzwasserrückleitung (54) angeordnet ist und die Kühlwasserrückleitung (53) und Spritzwasserrückleitung (54) in einen Filter (55) münden, der den Schleifstaub aus dem Kühlwasser entfernt.

7. Schleif- und Kühleinrichtung nach Patentanspruch 6, **dadurch gekennzei****net**, daß im Gestell (32) der Schleif- und Kühleinrichtung (24) eine Vakuumpumpe (57) angeordnet ist, von der eine Verbindungsleitung (58) zur inneren Wanne (50) im Gehäuseoberteil (34) führt, so daß die innere Wanne (50) unter einem Unterdruck gegenüber der äußeren Wanne (51) setzbar ist.

8. Schleif- und Kühleinrichtung nach Patentanspruch 7, **dadurch gekennzeichnet**, daß in der inneren Wanne (50) Rippen (59) zur Versteifung angeordnet sind.

9. Schleif- und Kühleinrichtung nach einem der Patentansprüche 1 bis 8, **dadurch** **gekennzeichnet**, daß die Schleifbürste (39) aus einer zylindrischen Hohlwalze (60) besteht, an deren beiden Enden Achsstummel (40, 40') eingeschweißt sind und die Schleifbürste (39) mit Hilfe der Achsstummel (40, 40') in den Wänden (45) der inneren Wanne (50) drehbar gelagert ist.

10. Schleif- und Kühleinrichtung nach Patentanspruch 9, **dadurch gekenn****zeichnet**, daß ein Achsstummel (40) durch die Wand (45) der inneren Wanne (50) in die äußere Wanne (51) hindurchreicht, auf dem Achsstummel (40) in der äußeren Wanne (51) ein Ritzel (41) angebracht ist, im Gestell (32) ein Motor (44) angeordnet ist, auf dessen Welle ein Antriebszahnrad (43) sitzt und über das Antriebszahnrad (43) und das Ritzel (41) ein Zahnriemen (42) gespannt ist, so daß der Motor (44) die Schleifbürste (39) dreht.

11. Schleif- und Kühleinrichtung nach einem der Patentansprüche 1 bis 10, **dadurch** **gekennzeichnet**, daß das Gehäuseoberteil (34) mittels einer Zylinder-Kolben-Einheit (38) vom Gehäuseunterteil (35) abgehoben werden kann.

12. Schleif- und Kühleinrichtung nach einem der Patentansprüche 9 bis 11, **dadurch gekennzeichnet**, daß die mantelförmige Oberfläche der zylindrischen Schleifbürste (39) spiralförmig von Nuten (62) durchzogen ist, so daß sich Nuten (62) und Stege (61) auf der Oberfläche abwechseln.

13. Schleif- und Kühleinrichtung nach Patentanspruch 12, **dadurch gekenn****zeichnet**, daß die Stege (61) der Schleifbürste (39) mit Hartstoffen besetzt sind.

14. Schleif- und Kühleinrichtung nach Patentanspruch 13, **dadurch gekenn****zeichnet**, daß es sich bei dem Hartstoff um kubisches Bornitrit handelt.

15. Schleif- und Kühleinrichtung nach Patentanspruch 12, **dadurch gekenn****zeichnet**, daß die Stege (61) der Schleifbürste (39) mit Diamanten besetzt sind.

16. Schleif- und Kühleinrichtung nach Patentanspruch 15, **dadurch gekenn****zeichnet**, daß die Stege (61) mit Diamanten besetzt sind, indem Diamantpulver galvanisch auf die Oberfläche der Stege (61) gebunden ist.

17. Schleif- und Kühleinrichtung nach Patentanspruch 15, **dadurch** **gekenn****zeichnet**, daß auf den Stegen (61) eine Diamant-Verbundschicht aufgebracht ist, die aus unter hohem Druck und Temperatur in eine Metallmatrix gesinterten Diamantpartikeln besteht.

18. Schleif- und Kühleinrichtung nach Patentanspruch 17, **dadurch gekenn****zeichnet**, daß die Diamant-Verbundschicht durch eine Verschweißung auf die Stege (61) aufgebracht ist.

19. Schleif- und Kühleinrichtung nach Patentanspruch 17, **dadurch gekenn****zeichnet**, daß die Diamant-Verbundschicht durch eine Hartlötung auf die Stege (61) aufgebracht ist.

## Claims

1. Abrading and cooling equipment, for a device for the continuous manufacture of laminates which consist of several layers of at least partially resin-impregnated material webs that have been pressed together, with unreeling units (2, 3) for the reception of the supply rolls (4, 5), from which the material webs are drawn off and subsequently are laid in layers one upon the other, a double-belt press (1), in which the layered material webs (6) are pressed together into a laminate web (7) under the influence of areal pressure and possibly heat, wherein the abrading and cooling equipment is arranged downstream of the double-belt press and the rear side of the laminate web (7) is roughened in it, and a reeling equipment (25) with supply rolls (26) for the reeling of the laminate web (7) or a crosscutting station (7) for the division of the laminate web (7) into plates (28), characterised thereby, that the abrading station is combined with the cooling station in a single apparatus into the abrading and cooling equipment (24), and that the abrading and cooling equipment (24) comprises a frame (32), on which an upper housing part (34) and a lower housing part (35) are arranged, that an inner trough (50), which is sealed off outwardly by seals (36) mounted in the upper housing part (34) and the lower housing part (35), is present in the upper housing part (34) and the lower housing part (35), an inlet and outlet gap (37) for the laminate web (7) into the inner trough (50) is present between the upper housing part (34) and the lower housing part (35), the inner trough (50) serves for the reception of cooling water and an abrading brush (39), over the surface of which the rear side (49) of the laminate web (7) is guided in contact therewith, is borne to be rotatable in the inner trough (50).

2. Abrading and cooling equipment according to claim 1, characterised thereby, that an outer trough (51), which serves for the reception of the leakage of the cooling water, is formed around the inner trough (50) by the upper housing part (34) and the lower housing part (35).

3. Abrading and cooling equipment according to claim 1 or 2, characterised thereby, that a bearing block (47) with counterpressure rollers (46) borne to be rotatable therein is so arranged in the upper housing part (34) that the counterpressure rollers (46) rest on the front side (48) of the laminate web (7) and lay the rear side of the laminate web (7) against the abrading brush (39) under a contact pressure.

4. Abrading and cooling equipment according to claim 3, characterised thereby, that the bearing block (47) is movable perpendicularly to the laminate web (7) in order to be able to set the counterpressure rollers (46) against the laminate web (7) or lift them off from this.

5. Abrading and cooling equipment according to claim 4, characterised thereby, that a movement sensor is arranged at the laminate web (7), which sensor on standstill of the laminate web (7) delivers a signal to the control of the device and this control in turn automatically initiates a raising of the bearing block (47) with the counterpressure rollers (46) off from the laminate web (7) in order to prevent an abrading through the laminate web (7).

6. Abrading and cooling equipment according to one of the claims 1 to 5, characterised thereby, that the inner trough (50) is provided with a cooling water inlet (52) and a cooling water return duct (53), that a spray water return duct (54) is arranged at the outer trough (51) and the cooling water return duct (53) and the spray water return duct (54) open into a filter (55), which removes the abraded dust from the cooling water.

7. Abrading and cooling equipment according to claim 6, characterised thereby, that a vacuum pump (57), from which a connecting duct (58) leads to the inner trough (50) in the upper housing part (34), is arranged in the frame (32) of the abrading and cooling equipment (24) so that the inner trough (50) is settable under an underpressure relative to the outer trough (51).

8. Abrading and cooling equipment according to claim 7, characterised thereby, that ribs (59) are arranged for stiffening in the inner trough (50).

9. Abrading and cooling equipment according to one of the claims 1 to 8, characterised thereby, that the abrading brush (39) consists of a hollow cylindrical roller (60), and both ends of which axle stubs (40, 40') are welded in and the abrading brush (39) is borne to be rotatable in the walls (45) of the inner trough (50) with the aid of the axle stubs (40, 40').

10. Abrading and cooling equipment according to claim 9, characterised thereby, that an axle stub (40) reaches through the wall (45) of the inner trough (50) into the outer trough (51), a pinion (41) is mounted on the axle stub (40) in the outer trough (51), a motor (44), on the shaft of which sits a toothed drive wheel (43), is arranged in the frame (32) and a toothed belt (42) is looped over the toothed drive wheel (43) and the pinion (41) so that the motor (44) rotates the abrading brush (39).

11. Abrading and cooling equipment according to one of the claims 1 to 11, characterised thereby, that the upper housing part (34) can be raised off from the lower housing part (35) by means of a piston-cylinder unit (38).

12. Abrading and cooling equipment according to one of the claims 9 to 11, characterised thereby, that the casing-shaped surface of the cylindrical abrading brush (39) is traversed helically by grooves (62) so that grooves (62) and webs (61) alternate on the surface.

13. Abrading and cooling equipment according to claim 12, characterised thereby, that the webs (61) of the abrading brush (39) are covered with hard substances.

14. Abrading and cooling equipment according to claim 13, characterised thereby, that cubic boron nitrite is concerned in the case of hard substances.

15. Abrading and cooling equipment according to claim 12, characterised thereby, that the webs (61) of the abrading brush (39) are covered with diamonds.

16. Abrading and cooling equipment according to claim 15, characterised thereby, that the webs (61) are covered with diamonds in that diamond powder is bonded galvanically to the surface of the webs (61).

17. Abrading and cooling equipment according to claim 15, characterised thereby, that a compound diamond layer, which consists of diamond particles sintered under high pressure and temperature into a metal matrix, is applied onto the webs (61).

18. Abrading and cooling equipment according to claim 17, characterised thereby, that the compound diamond layer is applied onto the webs (61) by a welding operation.

19. Abrading and cooling equipment according to claim 17, characterised thereby, that the compound diamond layer is applied onto the webs (61) by a hard-soldering operation.

## Revendications

1. Dispositif de production en continu de stratifiés qui sont constitués de plusieurs couches de feuilles de matériau au moins partiellement imprégnés de résine qu'on comprime ensemble, avec des unités de débobinage (2, 3) pour recevoir les bobines de réserve (4, 5) dont on déroule les feuilles de matériau et ensuite on les empile l'une sur l'autre avec une presse à double courroie (1) dans laquelle on comprime les feuilles de matériau empilées (6) sous l'effet de la pression superficielle et le cas échéant de la chaleur pour donner une feuille de stratifié (7), le dispositif de ponçage et de refroidissement est placé en aval de la presse à double courroie et on y rend rugueuse la face arrière de la feuille de stratifié (7) et avec un dispositif de bobinage (25) avec des bobines de réserve (26) pour bobiner la feuille de stratifié (7) ou un poste de coupe transversale (27) pour découper la feuille de stratifié (7) en plaques (28), caractérisé en ce que le poste de ponçage est combiné avec le poste de refroidissement en un seul appareil comme dispositif de ponçage et de refroidissement (24), et que le dispositif de ponçage et de refroidissement (24) possède un châssis (32) sur lequel est implantée une partie supérieure de boîtier (34) et une partie inférieure de boîtier (35), que dans la partie supérieure de boîtier (34) et la partie inférieure de boîtier (35) existe un bac interne (50) qui est rendu étanche vers l'extérieur par des joints (36) disposés dans la partie supérieure de boîtier (34) et dans la partie inférieure de boîtier (35), il existe entre la partie supérieure de boîtier (34) et la partie inférieure de boîtier (35) une fente d'entrée et de sortie (37) dans le bac interne (50) pour la feuille de stratifié (7), le bac interne (50) sert à recueillir l'eau de refroidissement et dans le bac interne (50) est logée en rotation une brosse de ponçage (39), à la surface de laquelle est guidée en contact la face arrière (49) de la feuille de stratifié (7).

2. Dispositif de ponçage et de refroidissement selon la revendication 1, caractérisé en ce qu'un bac externe (51) est formé autour du bac interne (50) par la partie supérieure de boîtier (34) et la partie inférieure de boîtier (35) qui sert à recueillir la fuite d'eau de refroidissement.

3. Dispositif de ponçage et de refroidissement selon la revendication 1 ou 2, caractérisé en ce qu'un bloc de palier (47) est implanté dans la partie supérieure de boîtier (34) avec des cylindres de contre-pression (46) qui y sont logés en rotation, de sorte que les cylindres de contre-pression (46) appuient sur la face avant (48) de la feuille de stratifié (7) et que la face arrière (49) de la feuille de stratifié (7) repose sous l'effet d'une pression d'application sur la brosse de ponçage (39).

4. Dispositif de ponçage et de refroidissement selon la revendication 3, caractérisé en ce que le bloc de palier (47) peut se déplacer perpendiculairement à la feuille de stratifié (7) pour pouvoir appliquer les cylindres de contre-pression (46) sur la feuille de stratifié (7) et pour pouvoir les soulever de celle-ci.

5. Dispositif de ponçage et de refroidissement selon la revendication 4, caractérisé en ce qu'un capteur de mouvement est disposé le long de la feuille de stratifié (7), qui, lors de l'arrêt de la feuille de stratifié (7) envoie un signal à la commande du dispositif et cette commande déclenche automatiquement un relevage du bloc de palier (47) avec les cylindres de contre-pression (46) de la feuille de stratifié (7), pour empêcher un ponçage complet de la feuille de stratifié (7).

6. Dispositif de ponçage et de refroidissement selon l'une des revendications 1 à 5, caractérisé en ce que le bac interne (50) est équipé d'une arrivée d'eau de refroidissement (52) et d'une conduite de recyclage d'eau de refroidissement (53), que sur le bac externe (51) une conduite de recyclage d'eau projetée (54) est disposée et que la conduite de recyclage d'eau de refroidissement (53) et la conduite de recyclage d'eau projetée (54) débouchent dans un filtre (55), qui élimine la poussière de ponçage de l'eau de refroidissement.

7. Dispositif de ponçage et de refroidissement selon la revendication 6, caractérisé en ce qu'on implante une pompe à vide (57) dans le châssis (32) du dispositif de ponçage et de refroidissement (24), d'où une conduite de liaison (58) mène au bac interne (50) dans la partie supérieure de boîtier (34), de sorte qu'on peut mettre le bac interne (50) sous dépression vis-à-vis du bac externe (51).

8. Dispositif de ponçage et de refroidissement selon la revendication 7, caractérisé en ce que des nervures (59) sont disposées dans le bac interne (50) pour le rigidifier.

9. Dispositif de ponçage et de refroidissement selon l'une des revendications 1 à 8, caractérisé en ce que la brosse de ponçage (39) est constituée d'un rouleau cylindrique creux (60) aux deux extrémités duquel sont soudés des tourillons (40, 40') et la brosse de ponçage (39) est logée en rotation à l'aide des tourillons d'arbre (40, 40') dans les parois (45) du bac interne (50).

10. Dispositif de ponçage et de refroidissement selon la revendication 9, caractérisé en ce qu'un tourillon (40) traverse la paroi (45) du bac interne (50) et parvient dans le bac externe (51), sur le tourillon (40) est monté un pignon (41) dans le bac externe (51), dans le châssis (32) est implanté un moteur (44), sur l'arbre duquel est montée une roue dentée d'entraînement (43) et une courroie crantée (42) est tendue entre la roue d'entraînement dentée (43) et le pignon (41), de sorte que le moteur (44) fasse tourner la brosse de ponçage (39).

11. Dispositif de ponçage et de refroidissement selon l'une des revendications 1 à 10, caractérisé en ce que la partie supérieure de boîtier (34) peut être soulevée de la partie inférieure de boîtier (35) au moyen d'une unité de vérin (38).

12. Dispositif de ponçage et de refroidissement selon l'une des revendications 9 à 11, caractérisé en ce que la surface en forme d'enveloppe de la brosse de ponçage cylindrique (39) est parcourue de gorges (62) en spirale, de sorte que des gorges (62) et des nervures (61) s'alternent sur la surface.

13. Dispositif de ponçage et de refroidissement selon la revendication 12, caractérisé en ce que les nervures (61) de la brosse de ponçage (39) sont garnies de matériaux durs.

14. Dispositif de ponçage et de refroidissement selon la revendication 13, caractérisé en ce qu'il s'agit de nitrure de bore cubique en tant que matériau dur.

15. Dispositif de ponçage et de refroidissement selon la revendication 12, caractérisé en ce que les nervures (61) de la brosse de ponçage (39) sont garnies de diamants.

16. Dispositif de ponçage et de refroidissement selon la revendication 15, caractérisé en ce que les nervures (61) sont garnies de diamants, de la poudre de diamant étant liée galvaniquement à la surface des nervures (61).

17. Dispositif de ponçage et de refroidissement selon la revendication 15, caractérisé en ce qu' on dispose sur les nervures (61) une couche composite de diamant qui est constituée de particules de diamant frittées sous hautes pression et température dans une matrice métallique.

18. Dispositif de ponçage et de refroidissement selon la revendication 17, caractérisé en ce que la couche composite de diamant est disposée par soudure sur les nervures (61).

19. Dispositif de ponçage et de refroidissement selon la revendication 17, caractérisé en ce que la couche de composite de diamant est déposée par brasage fort sur les nervures (61).
